(19) **Europäisches Patentamt / European Patent Office / Office européen des brevets**

(11) **EP 2 002 226 B1**

(12) **FASCICULE DE BREVET EUROPEEN**

(45) Date de publication et mention de la délivrance du brevet:
**09.10.2013 Bulletin 2013/41**

(51) Int Cl.:
*G01J 3/28* (2006.01)      *G01J 3/02* (2006.01)
*G02B 27/46* (2006.01)

(21) Numéro de dépôt: **07730936.7**

(22) Date de dépôt: **07.02.2007**

(86) Numéro de dépôt international:
**PCT/FR2007/000220**

(87) Numéro de publication internationale:
**WO 2007/107643 (27.09.2007 Gazette 2007/39)**

(54) **DISPOSITIF DE FORMATION DE SPECTRE SUR UN CAPTEUR OPTIQUE A REJET SPATIAL**

SPEKTRUMBILDUNGSEINRICHTUNG AUF EINEM OPTISCHEN SENSOR MIT RÄUMLICHER SPERRUNG

SPECTRUM-FORMING DEVICE ON AN OPTICAL SENSOR WITH SPATIAL REJECTION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **21.03.2006 FR 0602442**

(43) Date de publication de la demande:
**17.12.2008 Bulletin 2008/51**

(73) Titulaire: **SC SPIM**
**13180 Gignac La Nerthe (FR)**

(72) Inventeurs:
• **MEYNARD, Thierry**
**F-13710 Fuveau (FR)**
• **GUERN, Yves**
**F-13490 Jouques (FR)**
• **CARPENTIER, François**
**F-13180 Gignac La Nerthe (FR)**

(74) Mandataire: **Priori, Enrico et al**
**Cabinet Orès**
**36, rue de St. Pétersbourg**
**75008 Paris (FR)**

(56) Documents cités:
**EP-A1- 0 642 005      US-A- 5 627 639**

• **KING M D ET AL: "AIRBORNE SCANNING SPECTROMETER FOR REMOTE SENSING OF CLOUD, AEROSOL, WATER VAPOR, AND SURFACE PROPERTIES" JOURNAL OF ATMOSPHERIC AND OCEANIC TECHNOLOGY, AMERICAN METEOROLOGICAL SOCIETY, BOSTON, MA, US, vol. 13, no. 4, août 1996 (1996-08), pages 777-794, XP001240423 ISSN: 0739-0572**

**Description**

L'invention porte sur un dispositif optique permettant d'obtenir une image d'une scène observée et, en même temps, le spectre optique en tout point de ladite image.

Un tel dispositif permet en particulier la discrimination d'éléments présents dans une scène, qu'il s'agisse de gaz, de liquides, de matériaux solides ou de particules.

Une première approche, connue de l'art antérieur, pour obtenir des spectres optiques d'images (ou images spectrales) consiste à disposer des filtres à bande passante étroite devant une caméra, pour acquérir des images sensiblement monochromatiques, constituées de rayons lumineux ayant la même longueur d'onde ; en effectuant une pluralité d'acquisitions d'images de la même scène en utilisant des filtres différents il est possible de reconstituer le spectre optique de chaque point de ladite scène. Une telle approche n'est pas satisfaisante pour plusieurs raisons. Premièrement, le flux lumineux recueilli par la caméra est généralement trop faible pour permettre d'atteindre un rapport signal sur bruit acceptable ; une augmentation du flux ne peut être obtenue qu'en élargissant la bande passante de chaque filtre, c'est-à-dire en dégradant la résolution spectrale. Ce problème est particulièrement grave dans le cas des applications commerciales, dans lesquelles il est souhaité d'utiliser des capteurs de rayonnement non refroidis afin de réduire le coût et la complexité du dispositif. Un autre inconvénient est dû au fait que le flux lumineux recueilli varie fortement d'une longueur d'onde à l'autre : par conséquent la sensibilité et le point de fonctionnement des capteurs dé rayonnement varient d'une acquisition à l'autre.

Une approche plus prometteuse, également connue de l'art antérieur, consiste à utiliser, à la place des filtres à bande passante étroite, des filtres à rejet de bande, la bande rejetée étant également étroite. Une image sensiblement monochromatique à la longueur d'onde $\lambda_1$ peut être obtenue en soustrayant d'une image de référence acquise sans filtre, une image acquise à travers un filtre éliminant la composante spectrale à cette même longueur d'onde $\lambda_1$. Cette technique permet d'obtenir un meilleur rapport signal sur bruit et des variations de flux lumineux plus contenues, mais elle présente néanmoins des nombreux inconvénients liés à l'utilisation de filtres : les longueurs d'onde arrêtées par les filtres ne peuvent pas être variées de manière continue, ce qui conduit à un sous-échantillonnage de l'espace spectral ; chaque filtre présente, à l'extérieur de la bande de rejet spectral, une courbe de transmission différente ; l'utilisation de filtres d'épaisseurs différentes conduit à des décalages géométriques entre les différentes images ; et le passage des supports des filtres devant les capteurs à tendance à modifier le point de fonctionnement de ces derniers.

Pour ces raisons, le présent inventeur a développé un dispositif optique utilisant un dispositif de rejet spectral accordable en continu et ne présentant pas les inconvénients précités. Ce dispositif est décrit dans le document FR 2 788 137 et dans l'article :

Yves Guern, Laurence Grenier et François Carpentier, « Uncooled IRFPA for low-cost multispectral / hyperspectral LWIR imaging device », Spie, Vol. 5093, avril 2003, page 126.

Ce dispositif comprend notamment un premier moyen de dispersion spectrale (réseau, prisme), un masque interposé sur le trajet des rayons dispersés pour intercepter une bande étroite de longueurs d'onde et un deuxième moyen de dispersion spectrale (réseau, prisme), agissant comme moyen de recombinaison des rayons lumineux dispersés par le premier moyen. Un balayage continu du spectre peut être obtenu en déplaçant le masque.

Ce dispositif constitue une amélioration considérable par rapport à l'art antérieur, mais il présente néanmoins certains inconvénients.

Un premier inconvénient est lié à la présence de deux moyens de dispersion spectrale : cela entraîne des pertes de flux et une réduction de la bande optique passante. En outre, les réseaux de diffraction et les prismes sont des dispositifs coûteux.

Un autre inconvénient consiste dans le fait que l'optique du dispositif est relativement difficile à concevoir pour des raisons qui deviendront plus claires par la suite.

Un autre inconvénient est lié au fait que toute modification de la scène ou tout mouvement de l'appareil au cours d'une série d'acquisitions d'images est susceptible de générer des artéfacts dans les informations acquises ce qui est compensé au prix d'un traitement des informations plus complexe.

D'autres exemples de l'état de la technique sont illustrés par les documents US5627639, US3720469, US6101034, US2004080829, US5867264 et EP642005.

Un objet de l'invention est donc d'atténuer ou éliminer au moins un des inconvénients précités.

Cet objet est atteint par un dispositif optique comportant les caractéristiques de la revendication 1.

Selon des modes de réalisation particuliers de l'invention :

- Ledit moyen de dispersion spectrale peut présenter un plan de dispersion, ladite direction ou plage restreinte de directions de l'espace en correspondance de laquelle le moyen de filtrage spatial élimine lesdits rayons lumineux étant une direction dans ledit plan.

- Le dispositif peut comporter un seul moyen de dispersion spectrale.
- Le dispositif peut comporter également un moyen de traitement de données pour reconstituer le spectre d'une image de la scène observée à partir des signaux enregistrés par ledit détecteur d'image pour différents choix de la direction ou de la plage restreinte de directions de l'espace en correspondance de laquelle le moyen de filtrage spatial élimine lesdits rayons lumineux.
- Le dispositif peut comporter également un moyen de traitement de données pour reconstituer une image à large bande de ladite scène à partir des signaux enregistrés par ledit détecteur d'image. En particulier, ledit moyen de traitement de données pour reconstituer ladite image peut comprendre des moyens de calcul de la déconvolution desdits signaux enregistrés par le détecteur d'image par rapport à une fonction d'appareil dudit dispositif. De préférence ledit moyen de traitement de données effectue ladite reconstruction d'image en temps réel.
- Ledit moyen de filtrage spatial peut comprendre un premier système optique convergent, un second système optique convergent et au moins un masque disposé dans un plan image dudit premier système optique convergent.
- Ledit premier et second systèmes optiques convergents peuvent former un système optique afocal.
- Au moins ledit second système optique convergent peut être un système avec conjugaison pupillaire sur le moyen de dispersion spectrale.
- Au moins un parmi lesdits premier et second système optique convergent peut être constitué de lentilles.
- Ledit premier système optique convergent peut comprendre un objectif à longueur focale variable tel qu'un zoom.
- Ledit masque opaque peut présenter une forme linéaire.
- Ledit moyen de filtrage spatial peut comprendre également au moins un, et de préférence au moins deux, écrans situés dans ledit plan image pour délimiter une plage de directions des rayons lumineux issus de ladite scène observée et éliminer les rayons issus de directions non appartenant à ladite plage.
- Lesdits moyens pour faire varier la direction ou la plage restreinte de directions de l'espace en correspondance de laquelle le moyen de filtrage spatial élimine les rayons lumineux peuvent comporter un miroir oscillant ou tournant pour impartir une déviation variable auxdits rayons lumineux avant leur entrée dans ledit moyen de filtrage spatial ; dans ce cas ledit premier système optique convergent peut être un système avec conjugaison pupillaire sur ledit miroir oscillant ou tournant.
- Lesdits moyens pour faire varier la direction ou la plage restreinte de directions de l'espace en correspondance de laquelle le moyen de filtrage spatial élimine les rayons lumineux peuvent comprendre des moyens de déplacement linéaire dudit détecteur d'image par rapport à ladite scène observée.
- Lesdits moyens pour faire varier la direction ou la plage restreinte de directions de l'espace en correspondance de laquelle le moyen de filtrage spatial élimine les rayons lumineux peuvent comporter des moyens de déplacement dudit masque dans le plan image dudit système afocal.
- Ledit moyen de dispersion spectrale comporte un réseau de diffraction, qui peut être concave pour simplifier l'optique.
- Ledit réseau peut présenter un angle d'inclinaison par rapport à un axe optique dudit dispositif tel que, parmi les rayons lumineux diffractés par ledit réseau de diffraction, seuls ceux correspondant à un ordre de diffraction prédéterminé (généralement un premier ordre) parviennent audit détecteur d'images..
- Ledit détecteur d'image peut comprendre un matrice de capteurs de rayonnement lumineux, de préférence présentant un axe perpendiculaire audit plan de dispersion du moyen de dispersion spectrale.
- Le dispositif peut comporter également un objectif disposé entre ledit moyen de dispersion spectrale et ledit détecteur d'image.
- Le dispositif peut être adapté pour opérer dans toute région spectrale, telle que l'ultraviolet, le visible et l'infrarouge, par exemple dans la région des longueurs d'onde comprises entre 7 et 14 $\mu$m.

D'autres caractéristiques, détails et avantages de l'invention ressortiront à la lecture de la description faite en référence aux dessins annexés donnés à titre d'exemple et qui représentent, respectivement :

- la figure 1, un schéma optique d'un dispositif d'imagerie spectrale connu de l'art antérieur ; et
- la figure 2, un schéma optique d'un dispositif d'imagerie spectrale selon l'invention.

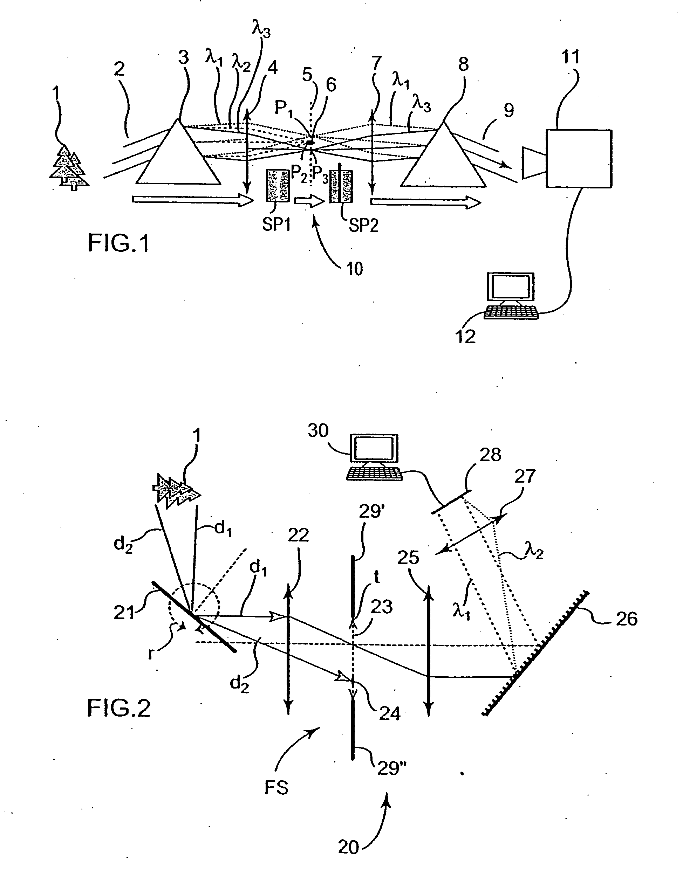

Le dispositif d'imagerie spectrale connu de l'art antérieur représenté sur la figure 1 comprend un dispositif de sélection spectrale 10, une caméra infrarouge 11 et un dispositif de traitement de données 12. Le dispositif de sélection spectrale 10 est essentiellement constitué par un premier prisme dispersif 3, une première lentille ou objectif 4, un masque opaque 6, une deuxième lentille 7 et un deuxième prisme dispersif 8. Chaque objectif peut avoir sa pupille sur le réseau qui lui fait face.

Un faisceau 2 de rayons lumineux issus d'une scène 1 observée par l'intermédiaire du dispositif traverse le premier prisme dispersif 3 qui impartit à chaque rayon une déviation dépendante de sa longueur d'onde ; la figure représente des rayons d'une première longueur d'onde $\lambda_1$ (trait pointillé), d'une deuxième longueur d'onde $\lambda_2$ (trait hachuré) et d'une troisième longueur d'onde $\lambda_3$ (trait continu). Pour des raisons de simplicité, seuls des rayons parallèles entre eux sont représentés, mais en fait le dispositif reçoit en entrée des rayons provenant de différentes directions de l'espace. Les rayons dispersés par le prisme 3 sont focalisés par la première lentille 4 ; dans le plan focal 5 de cette dernière, chaque composante spectrale ($\lambda_1$, $\lambda_2$, $\lambda_3$) est focalisée dans un point distinct ($P_1$, $P_2$, $P_3$ respectivement). Un masque opaque 6 est situé dans ledit plan focal 5 de manière à intercepter tous les rayons ayant une longueur d'onde déterminée, $\lambda_2$ dans le cas de la figure. Les rayons qui ne sont pas interceptés par le masque 6 sont collimatés par la deuxième lentille 7, dont un plan focal coïncide avec le plan focal 5 de la première lentille 4, et recombinés spectralement par le deuxième prisme dispersif 8. Le faisceau 9 de rayons lumineux sortant du sélecteur spectral 10 est intercepté par la caméra infrarouge 11 qui forme une image de la scène 1, de laquelle la composante spectrale à la longueur d'onde $\lambda_2$ a été retirée. Une série d'acquisitions est effectuée pour différentes positions du masque 6 dans le plan focal 5, et le dispositif de traitement de données 12 reconstruit le spectre complet de l'image de la scène 1 à partir de cette série d'acquisition.

Le spectre du faisceau de rayons lumineux en entrée 2 est représenté symboliquement sur la figure et identifié par la référence SP1. La référence SP2 identifie le spectre du faisceau de sortie 9, présentant une bande sombre (luminosité nulle) en correspondance de la composante spectrale $\lambda_2$ interceptée par le masque 6.

La figure 1 montre le sélecteur spectral 10 dans un plan parallèle au plan de dispersion des prismes 3 et 8, par exemple vertical. On suppose que la caméra 11 soit pourvue d'une matrice de détecteurs présentant un axe vertical (colonnes) et un axe horizontal (lignes). En l'absence de dispersion introduite par les prismes 3 et 8, les rayons lumineux issus d'une direction spatiale i sont focalisés dans un point, indiqué également par i, du plan focal 5 et imagés sur une ligne i de la matrice de détecteurs de la caméra. A cause de la dispersion, les rayons ayant une longueur d'onde $\lambda_j$, issu de cette même direction spatiale i, ne sont pas focalisés au point i du plan focal 5, mais en un autre point, dépendant de la longueur d'onde, qui peut être indiqué par (i+j), en supposant une dispersion linéaire. Comme le système lentille 7 - prisme 8 compense exactement la dispersion du système prisme 3 - lentille 4, ces rayons sont toujours imagés sur la ligne i de la matrice de détecteurs, à condition de ne pas être interceptés par le masque 6. Si la position dudit masque est indiqué par k, seront interceptés tous les rayons dont la direction spatiale d'origine i et la longueur d'onde $\lambda_j$ sont telles que i+j=k. On comprend donc aisément que, en supposant constante la transmission et la sensibilité spectrale du dispositif, le signal capté par les capteurs de la ligne i de la matrice de la caméra 11 lorsque le masque 6 est à la position k peut être exprimé par :

$$S_{ik} = \sum_{j=0}^{N} L_i(\lambda_j) - L_i(\lambda_{k-i}) \qquad [1]$$

où $L_i(\lambda_i)$ est la luminance à la longueur d'onde $\lambda_j$ pour la direction i, en supposant un ensemble discret de longueurs d'onde $\lambda_j$, j=0-N, dont une seule est éliminée par le masque 6 à chaque acquisition, et de directions de l'espace i=0-M. L'équation [1] montre que chaque ligne de la matrice de détecteurs de la caméra 11 enregistre un élément linéaire d'une image de la scène 1 dont une composante spectrale a été supprimée ; la composante spectrale supprimée dépend de la position du masque 6 et de la ligne considérée. Soit $S_i = \sum_{j=0}^{N} L_i(\lambda_j)$ le signal obtenu en l'absence de masque ; une simple soustraction permet d'obtenir les luminances pour la direction i aux différentes longueurs d'onde :

$$S_i - S_{ik} = L_i(\lambda_{k-i}) \qquad [2]$$

Pour obtenir toutes les valeurs de longueur d'onde de la i-ème ligne, le masque 6 doit balayer toutes les positions k. Le spectre provenant de la région i est donc reconstruit petit à petit à partir de plusieurs images (autant que de valeurs de k possibles). Par conséquent, le traitement des données brutes par le moyen 12 ne peut se faire qu'à la fin de la série d'acquisitions.

On peut maintenant comprendre l'origine de certains inconvénients de ce dispositif qui ont été mentionnés plus haut. Premièrement, le système lentille 7 - prisme 8 doit compenser exactement la dispersion du système prisme 3 - lentille 4 ; en particulier, si les prismes 3 et 7 sont égaux, les lentilles 4 et 7 doivent avoir la même longueur focale. Il s'agit là d'une contrainte qui limite la liberté du concepteur du dispositif. Encore un autre inconvénient est lié aux effets des mouvements de la scène ou du dispositif au cours de l'acquisition. En effet, ces mouvements ont l'effet de « mélanger » les spectres ; autrement dit, il peut arriver que la composante spectrale $\lambda_j$ attribuée à la direction i provienne en réalité de la direction i'≠i. Ce type d'artéfact particulièrement nuisible, doit être compensé par le traitement des informations, fondé sur la détection des zones en mouvement dans l'image.

Une variante potentiellement avantageuse du dispositif de la figure 1 comporte des réseaux de diffraction à la place des prismes 3 et 8. Cependant, on se heurte à la difficulté d'éliminer les contributions parasites de l'ordre zéro (non dispersif) et des ordres supérieurs de diffraction.

Un schéma de principe d'un dispositif d'imagerie spectrale 20 selon l'invention est représenté sur la figure 2, censé montrer un tel dispositif vu de dessus. Un tel dispositif comporte un miroir 21, éventuellement oscillant ou tournant (double flèche r), une première lentille convergente 22 ayant un plan focal 23, un masque opaque linéaire 24 disposé dans le plan focal 23 et éventuellement mobile dans ce plan (double flèche t), une seconde lentille convergente 25 dont un plan focal coïncide avec le plan focal 23 de la première lentille 22 et un moyen de dispersion spectrale tel qu'un réseau de diffraction 26. Le réseau 26 est observé par un détecteur d'image 28 (matrice de capteurs de rayonnement) à travers un objectif 27 ; l'objectif 27 et le détecteur d'image 28 correspondent essentiellement à la caméra 11 du dispositif de la figure 1. Les signaux bruts acquis par le détecteur d'image 28 sont traités par un dispositif de traitement de données 30.

Optionnellement, deux écrans 29' et 29" disposés dans le plan focal 23 délimitent une région utile de ce dernier. Si le masque 24 est mobile, le miroir 21 peut être fixe ou éventuellement absent. Ici et dans la suite, le terme « lentille » doit être interprété au sens large comme synonyme de système optique réfractif pouvant comprendre une pluralité de lentilles individuelles.

Des rayons lumineux issus d'une scène observée 1 sont incidents sur le miroir 21, supposé fixe. Ces rayons proviennent de différentes directions de l'espace ; la figure 2 montre à titre d'exemple un premier rayon $d_1$ provenant d'une première direction de l'espace et un deuxième rayon $d_2$ provenant d'une deuxième direction de l'espace. Si la scène 1 est située à l'infini, chaque direction de l'espace est associée à un point précis de ladite scène.

Les rayons $d_1$ et $d_2$ sont dirigés par le miroir 21 vers le système afocal formé par les lentilles 22 et 25 et le masque 24, identifié dans son ensemble par la référence FS. Cet ensemble FS constitue un moyen de filtrage spatial : tous les rayons issus d'une même direction de l'espace (par exemple $d_1$ et les rayons parallèles à $d_1$) sont focalisés dans un même point du plan focal 23, également connu comme « plan image » du système afocal. Le masque 24 disposé dans ce plan permet d'éliminer tous les rayons issus de la scène 1 qui proviennent d'une direction déterminée de l'espace, ou d'une plage restreinte de directions si on prend en compte la largeur finie du masque ; dans le cas de la figure 2, il s'agit de la direction dont provient le rayon $d_2$. Les principes généraux du filtrage spatial sont connus de l'art antérieur et exposés notamment dans l'ouvrage de J. W. Goodman « Introduction to Fourier Optics », McGraw-Hill Book Company. On comprend qu'il est également possible de prévoir deux ou plusieurs masques pour éliminer les rayons provenant d'un nombre correspondant de directions. Il est toutefois nécessaire que seulement une petite fraction des rayons issus de la scène 1 soit éliminée par le moyen de filtrage spatial FS.

On observe que le dispositif de la figure 1 comporte un agencement d'éléments optiques (lentilles 4 et 7, masque 6) similaire au moyen de filtrage spatial FS de l'invention, mais dont la fonction est complètement différente. Dans le cas de la figure 1 il s'agit d'un sélecteur spectral, qui élimine une composante spectrale de tous les rayons issus de la scène 1, mais ne supprime entièrement aucune « composante spatiale ». Au contraire, dans le cas de l'invention, FS est un moyen de filtrage spatial au sens propre du terme, qui supprime une composante spatiale du rayonnement issu de la scène 1 sans distinguer parmi ses différentes composantes spectrales.

Les rayons issus du filtre spatial FS sont dirigés vers le réseau 26 qui impartit auxdits rayons une déviation dépendante de leur longueur d'onde. Ainsi, sur la figure 2, le rayon $d_1$ est décomposé en deux rayons monochromatiques ayant des longueurs d'onde différentes, $\lambda_1$ et $\lambda_2$. Par l'intermédiaire de l'objectif 27 ces rayons monochromatiques sont imagés en deux points distincts du détecteur d'image 28.

Dans le dispositif de la figure 2, le réseau 26 présente un plan de dispersion horizontal et le masque linéaire 24 s'étend perpendiculairement au dit plan de dispersion (donc verticalement). L'homme du métier comprend que, dans une telle configuration, le terme « direction de l'espace » indique en fait une direction du plan de dispersion du réseau 26.

Dans la suite on considère que le détecteur 28 a une structure matricielle et présente un axe parallèle au plan de dispersion (lignes) et un axe perpendiculaire à ce dernier (colonnes). Cette caractéristique n'est pas essentielle, mais facilite la compréhension de l'invention et simplifie lé traitement numérique des données. Dans un but de simplicité on peut se limiter à considérer une seule ligne du détecteur 28 : en effet, chacune de ces lignes du détecteur ne reçoit que des rayons lumineux provenant d'une même ligne horizontale de la scène 1 et peut donc être traitée indépendamment des autres. On comprend qu'à la limite le détecteur 28 peut ne comporter qu'une seule ligne. Dans ce cas, le dispositif ne permet que l'acquisition d'une image unidimensionnelle ; une image bidimensionnelle peut être reconstruite à partir d'une pluralité de telles images unidimensionnelles.

On indique par i une direction de l'espace dont proviennent des rayons lumineux ; en l'absence de dispersion du réseau 26 et sans considérer le masque 24, ces rayons seraient focalisés sur la i-ème colonne du détecteur matriciel 28 (ou sur le i-ème capteur d'un détecteur linéaire horizontal). Or, la dispersion introduit une déviation dépendante de la longueur d'onde, qui fait que les rayons provenant de la direction i et présentant une longueur d'onde $\lambda_j$ se trouvent en fait focalisés sur le capteur (i+j).

Si tous les rayons entrant dans le dispositif provenaient de la même direction de l'espace, le détecteur 28 enregistrerait simplement un spectre de ces rayons, comme dans un spectromètre classique. Un tel résultat serait obtenu en situant dans le plan image 24 un écran pourvu d'une fente. Au contraire, dans le dispositif de l'invention, le détecteur 28 enregistre une superposition de spectres décalés entre eux et correspondant aux différentes directions de l'espace. Soit $L_i(\lambda_j)$ la luminance à la longueur d'onde $\lambda_j$ des rayons provenant de la direction i ; lorsque le masque 24 est disposé de manière à bloquer les rayons issus de la direction k, le signal récolté par le i-ème capteur (ou par les capteurs de la i-ème colonne) du détecteur 28 est donné par :

$$S_{ik} = \sum_{j=0}^{N} L_{i-j}(\lambda_j) - L_k(\lambda_{i-k}) \qquad [3]$$

où N est la largeur spectrale totale du dispositif et où on a considéré, pour simplifier, que la transmission du dispositif et la sensibilité du détecteur 28 sont indépendants de la longueur d'onde. D'une manière plus réaliste on peut considérer que le masque 24, ayant une largeur finie, intercepte tous les rayons provenant d'une plage restreinte de directions de l'espace [k-n/2 ; k+n/2] ; par « plage restreinte » on entend une plage de directions qui n'est pas plus large d'un dixième du champ visuel du dispositif, et de préférence de l'ordre du centième ou moins. L'équation [3] devient donc :

$$S_{ik} = \sum_{j=0}^{N} L_{i-j}(\lambda_j) - \sum_{j=k-n/2}^{k+n/2} L_j(\lambda_{i-j}) \qquad [4]$$

On indique par $S_i$, sans l'indice k, le signal en l'absence du masque:

$$S_i = \sum_{j=0}^{N} L_{i-j}(\lambda_j) \qquad [5]$$

En effectuant la soustraction $S_i - S_{ik}$ on obtient :

$$S_i - S_{ik} = \sum_{j=k-n/2}^{k+n/2} L_j(\lambda_{i-j}) \qquad [6]$$

La signification de l'équation [6] apparaît plus clairement si on considère un masque éliminant uniquement la direction k de l'espace. Dans ce cas :

$$S_i - S_{ik} = L_k(\lambda_{i-k}) \qquad [7]$$

Le signal obtenu après soustraction n'est rien d'autre que le spectre des rayons issus de la direction k. En déplaçant le masque 24 à l'aide d'un moyen d'actionnement non représenté, tel qu'un galvanomètre, on effectue un balayage de k sur une plage admissible de directions de l'espace, qui rend possible la reconstitution du spectre de l'image complète de la scène 1.

Il est souhaitable de pouvoir acquérir, au cours du balayage du masque 24, une image à large bande en temps réel de la scène 1 observée. Par image à large bande on entend une image constituée par une pluralité de composantes spectrales qui peuvent être distinguées par le dispositif d'imagerie spectrale ; d'une manière équivalente, une image à large bande est une image dont le spectre présente une largeur de bande qui est supérieure à la résolution spectrale du dispositif. Une telle acquisition d'image permet de vérifier que le dispositif observe toujours la même scène et, le cas échéant, de corriger des petits déplacements du champ visuel. Le moyen de traitement des données 30 effectue une déconvolution en temps réel du signal acquis par le détecteur 28 par la fonction d'appareil du dispositif, transmission du dispositif (qui peut être mesurée),comprenant en particulier sa fonction de transmission optique, puis reconstruit l'image de la scène 1. D'une manière classique, la déconvolution peut être calculée à l'aide de transformées de Fourier, par ondelettes ou par calcul matriciel. Ce procédé met donc à profit le fait que du flux provient à chaque fois de toute (quasi) la scène, ce qui ne serait pas possible avec un spectromètre classique à fente.

Il est connu que la déconvolution est une opération potentiellement instable, très sensible aux conditions initiales. Pour cette raison il est avantageux de prévoir, dans le plan image 23 du moyen de filtrage spatial FS, deux écrans fixes 29', 29" pour délimiter une plage de directions des rayons lumineux issus de ladite scène observées et éliminer les rayons issus de directions non appartenant à ladite plage. Le masque 24 est situé ou se déplace dans l'espacement entre les deux écrans. De cette façon on connaît a priori que le signal est nul sur les bords de la plage délimitée par les écrans 29', 29" et en correspondance du masque 24, ce qui limite les risques d'instabilité lors de la reconstitution des images spectrales. En variante, un seul écran fixe peut être utilisé.

L'équation [7] montre que plus le masque 24 est fin, meilleure est la résolution spatiale du dispositif 20, mais plus d'acquisitions sont nécessaires pour obtenir un spectre de l'image entière. En outre, l'utilisation d'un masque trop fin entraîne une dégradation du rapport signal sur bruit de l'image reconstituée. En pratique, on choisit n compris entre 1 et 10 pixels (capteurs individuels du détecteur matriciel 28), ce qui correspond à une largeur physique du masque donnée par $n \cdot \text{TaillePixel} \cdot f_{27}/f_{25}$, où TaillePixel est la taille de chaque pixel du détecteur 28 et $f_{27}$, $f_{25}$ sont les longueurs focales de l'objectif 27 et de la lentille 25, respectivement. La résolution spectrale, par contre, est indépendant de la largeur du masque et dépend exclusivement de la dispersion du réseau 26 et de la résolution spatiale de l'ensemble objectif 27- détecteur 28.

Des nombreuses variantes du dispositif de la figure 2 peuvent être envisagées. Premièrement, le masque 24 peut être maintenu fixe, le balayage pouvant être obtenu en faisant tourner ou osciller le miroir d'entrée 21. Dans ce cas il est avantageux que la pupille d'entrée du dispositif soit située sur ledit miroir 21, afin d'éviter que la rotation ou oscillation de ce miroir entraîne un déplacement latéral des images des objets proches. Alternativement, les mouvements du miroir et du masque peuvent être combinés.

Comme il a été dit plus haut, les « lentilles » 22 et 25 peuvent être en fait des systèmes optiques complexes, constitués de plusieurs lentilles individuelles. En particulier, il est très avantageux qu'au moins la seconde lentille 25 réalise la conjugaison pupillaire du réseau, pour limiter les problèmes de vignettage et de non uniformité de la réflectivité du réseau en fonction de l'angle de champ. Lorsque le miroir d'entrée 21 est oscillant ou tournant, il est avantageux que la première lentille 22 soit, elle aussi, à conjugaison pupillaire.

Lesdites lentilles 22 et 25 peuvent aussi être remplacées par des systèmes comprenant des miroirs, par exemple des miroirs concaves. Plus généralement, le filtre spatial FS peut être remplacé par d'autres moyens de filtrage spatial ayant une structure physique différente. Le filtre spatial est rendu « accordable » par des moyens permettant de faire varier la direction ou la plage restreinte de directions de l'espace en correspondance de laquelle les rayons lumineux sont éliminés. Les moyens de déplacement du masque 24 et le miroir oscillant ou tournant 21 ne constituent que des exemples de tels moyens. D'une manière alternative, le même effet peut être obtenu en effectuant un déplacement linéaire du détecteur d'image 28 par rapport à la scène observée, par exemple en montant un dispositif selon l'invention sur un véhicule en mouvement, tel qu'un avion. De cette façon, le dispositif d'imagerie spectrale peut ne comporter aucune partie en mouvement. Le déplacement linéaire du détecteur 28 peut également être combiné avec l'utilisation d'un masque mobile et/ou d'un miroir oscillant ou tournant.

Le réseau 26 peut être remplacé par un autre moyen de dispersion spectral, tel qu'un prisme.

Le réseau peut également être concave : il assure alors également toute ou partie des fonction d'imagerie éliminant ainsi la lentille 25 et/ou l'objectif 27.

Dans tous ces cas, le choix optimal parmi les différentes possibilités offertes dépend de l'application spécifique considérée, et en particulier du domaine spectral pour lequel le dispositif est conçu.

Le dispositif 20 de la figure 2 présente des avantages importants par rapport au dispositif de l'art antérieur représenté sur la figure 1. Premièrement, la présence d'un seul moyen de dispersion spectrale permet d'augmenter sensiblement le facteur de transmission et la bande passante du dispositif et en même temps d'en réduire le coût. En outre, le concepteur dispose d'une plus grande liberté de choix dans le dimensionnement des lentilles ou systèmes optiques 22, 25 : en effet, il n'est pas nécessaire que lesdites lentilles aient la même longueur focale, ni qu'elles forment un système afocal. Il est ainsi possible de remplacer la lentille 22 par un objectif à longueur focale variable tel qu'un zoom, de préférence motorisé, ce qui n'aurait pas été envisageable dans le cas du dispositif de la figure 1, car toute modification de la longueur focale de la lentille 4 aurait empêché la recombinaison spectrale des rayons dispersés.

Un autre avantage consiste en l'élimination des artéfacts spectraux dus aux mouvements de la scène 1 ou du dispositif au cours de la série d'acquisitions. En effet, comme à chaque acquisition d'une image de la matrice on obtient le spectre complet d'une partie de la scène, on est nettement moins soumis aux variations temporelles de la scène qui produisent des artéfacts dans le cas du dispositif de la figure 1.

Encore un autre avantage est que le traitement des données brutes permettant d'obtenir les images spectrales, ainsi que l'image à large bande, peut se faire en temps réel, c'est-à-dire à fur et à mesure que ces données sont acquises, sans devoir attendre la fin du balayage.

Encore un autre avantage est qu'il est possible d'effectuer un balayage réduit pour obtenir des spectres complets d'une partie seulement de la scène 1. Dans le cas du dispositif de la figure 1, un balayage partiel fournit au contraire des spectres partiels de l'image entière.

Encore un autre avantage consiste dans le fait qu'il est relativement simple de supprimer les images parasites dues aux ordres de diffraction supérieurs du réseau 26, simplement en choisissant de manière opportune l'inclinaison dudit réseau par rapport à l'axe optique du dispositif. Au contraire, cela n'est pas possible dans le cas d'un sélecteur spectral du type de la figure 1 dans lequel les prismes seraient remplacés par deux réseaux. Dans un tel dispositif, des images parasites sont dues, par exemple, à des rayons qui subissent une réflexion spéculaire (ordre 0) sur le premier réseau et une diffraction du $2^e$ ordre sur le deuxième réseau. Ces rayons traversent le plan du masque sensiblement au même endroit que les rayons « utiles », subissant deux diffractions du $1^{er}$ ordre, et par conséquent ils ne peuvent pas être éliminés par des écrans ou ouvertures.

Par contre, l'utilisation d'un masque 24 ayant une largeur finie introduit un flou dans l'image, mais cet effet indésirable peut être facilement compensé en effectuant une déconvolution par un signal « porte » rectangulaire.

## Revendications

1. Dispositif optique comportant:

   - un moyen de filtrage spatial (FS) pour éliminer, parmi les rayons lumineux issus d'une scène (1) observée, ceux qui proviennent d'une direction ou une plage restreinte de directions de l'espace n'excédant pas un dixième, et de préférence un centième, de la largeur du champ visuel du dispositif, tout en laissant passer la plus grande partie des rayons lumineux issus de ladite scène ;
   - des moyens (21) pour faire varier la direction ou la plage restreinte de directions de l'espace en correspondance de laquelle le moyen de filtrage spatial (FS) élimine lesdits rayons lumineux;
   - un moyen de dispersion spectrale (26) pour impartir aux rayons lumineux issus dudit moyen de filtrage spatial (FS) une déviation dépendante de leur longueur d'onde; et
   - un détecteur d'image (28) pour enregistrer les rayons lumineux dispersés par ledit moyen de dispersion spectrale (26), chaque point dudit détecteur d'image (28) recevant des rayons lumineux issus de ladite scène (1) et présentant une longueur d'onde différente en fonction de la direction de l'espace de laquelle ils proviennent.

2. Dispositif selon la revendication 1 dans lequel ledit moyen de dispersion spectrale (26) présente un plan de dispersion et dans lequel ladite direction ou plage restreinte de directions de l'espace en correspondance de laquelle le moyen de filtrage spatial (FS) élimine lesdits rayons lumineux est une direction dans ledit plan.

3. Dispositif selon l'une des revendications précédentes, comportant un seul moyen de dispersion spectrale (26).

4. Dispositif selon l'une des revendications précédentes comportant également un moyen de traitement de données (30) pour reconstituer le spectre d'une image de la scène (1) observée à partir des signaux enregistrés par ledit détecteur d'image (28) pour différents choix de la direction ou la plage restreinte de directions de l'espace en correspondance de laquelle le moyen de filtrage spatial élimine lesdits rayons lumineux.

5. Dispositif selon la revendication 4, dans lequel ledit moyen de traitement de données est adapté pour :

   - calculer une différence entre un premier signal, enregistré par ledit détecteur d'image (28) en l'absence de filtrage spatial, et un deuxième signal, enregistré par ledit détecteur d'image (28) alors que ledit moyen de filtrage spatial (FS) élimine les rayons lumineux qui proviennent d'une direction ou une plage restreinte de directions de l'espace ; et
   - répéter ledit calcul pour une pluralité de directions ou de plages restreintes de directions de l'espace de manière à reconstituer un spectre d'une image de la scène (1) observée.

6. Dispositif selon l'une des revendications précédentes comportant également un moyen de traitement de données (30) pour reconstituer une image à large bande de ladite scène à partir des signaux enregistrés par ledit détecteur d'image (28).

7. Dispositif selon la revendication 6 dans lequel ledit moyen de traitement de données (30) pour reconstituer ladite image comprend des moyens de calcul de la déconvolution desdits signaux enregistrés par le détecteur d'image (28) par rapport à une fonction d'appareil dudit dispositif.

8. Dispositif selon l'une des revendications précédentes dans lequel ledit moyen de filtrage spatial (FS) comprend un premier système optique convergent (22), un second système optique convergent (25) et au moins un masque (24) disposé dans un plan image (23) dudit premier système optique convergent (22).

9. Dispositif selon la revendication 8 dans lequel ledit masque opaque (24) présente une forme linéaire.

10. Dispositif selon l'une des revendications 8 ou 9 dans lequel ledit moyen de filtrage spatial (FS) comprend également au moins un, et de préférence au moins deux, écrans (29', 29") situés dans ledit plan image (23) pour délimiter une plage de directions des rayons lumineux issus de ladite scène (1) observée et éliminer les rayons issus de directions non appartenant à ladite plage.

11. Dispositif selon l'une des revendications précédentes dans lequel lesdits moyens (21) pour faire varier la direction ou la plage restreinte de directions de l'espace en correspondance de laquelle le moyen de filtrage spatial élimine les rayons lumineux comportent un miroir oscillant ou tournant (21) pour impartir une déviation variable auxdits rayons lumineux avant leur entrée dans ledit moyen de filtrage spatial (FS).

12. Dispositif selon l'une des revendications 8 à 11 dans lequel lesdits moyens pour faire varier la direction ou la plage restreinte de directions de l'espace, en correspondance de laquelle le moyen de filtrage spatial (FS) élimine les rayons lumineux, comportent des moyens de déplacement linéaire dudit détecteur d'image (28) par rapport à ladite scène observée.

13. Dispositif selon l'une des revendications précédentes dans lequel ledit détecteur d'image (28) comprend une matrice de capteurs de rayonnement lumineux.

14. Dispositif selon l'une des revendications précédentes, adapté pour opérer dans la région spectrale de l'infrarouge.

**Patentansprüche**

1. Optische Vorrichtung, umfassend:

   - ein Mittel zur räumlichen Filterung (FS), um unter den von einer beobachteten Szene (1) ausgehenden Lichtstrahlen diejenigen zu eliminieren, welche hervorgehen aus einer Richtung oder einem begrenzten Bereich von Richtungen des Raumes, welcher ein Zehntel, und bevorzugt ein Hundertstel, der Weite des Sichtfelds der Vorrichtung nicht überschreitet, wobei der größte Teil der von der Szene ausgehenden Lichtstrahlen durchgelassen wird;
   - Mittel (21), um die Richtung oder den begrenzten Bereich von Richtungen des Raums variieren zu lassen in Entsprechung zu welcher bzw. welchem das Mittel zur räumlichen Filterung (FS) die Lichtstrahlen eliminiert;
   - ein Mittel zur spektralen Dispersion (26), um den aus dem Mittel zur räumlichen Filterung (FS) hervorgehenden Lichtstrahlen eine von ihrer Wellenlänge abhängige Abweichung zu verleihen; und
   - einen Bilddetektor (28), um durch das Mittel zur spektralen Dispersion (26) gestreute Lichtstrahlen zu erfassen, wobei jeder Punkt des Bilddetektors (28) Lichtstrahlen aufnimmt, welche von der Szene (1) ausgehen und eine abhängig von der Richtung des Raums, aus welcher sie hervorgehen unterschiedliche Wellenlänge aufweisen.

2. Vorrichtung nach Anspruch 1, wobei das Mittel zur spektralen Dispersion (26) eine Streuebene aufweist und wobei die Richtung oder der begrenzte Bereich von Richtungen des Raums in Entsprechung zu welcher bzw. welchem worin das Mittel zur räumlichen Filterung (FS) die Lichtstrahlen eliminiert, eine Richtung in der Ebene ist.

3. Vorrichtung nach einem der vorhergehenden Ansprüche, umfassend ein einziges Mittel zur spektralen Dispersion (26).

4. Vorrichtung nach einem der vorhergehenden Ansprüche, umfassend außerdem ein Mittel zur Datenverarbeitung (30), um das Spektrum eines Bildes der beobachteten Szene (1) ausgehend von Signalen zu rekonstruieren, welche von dem Bilddetektor (28) für unterschiedliche Auswahlen der Richtung oder des begrenzten Bereichs von Richtungen des Raums erfasst wurden, in Entsprechung zu welcher bzw. welchem das Mittel zur räumlichen Filterung die Lichtstrahlen eliminiert.

**5.** Vorrichtung nach Anspruch 4, wobei das Mittel zur Datenverarbeitung dazu ausgestaltet ist:

- eine Differenz zu berechnen zwischen einem ersten Signal, welches von dem Bilddetektor (28) in Abwesenheit der räumlichen Filterung erfasst wurde, und einem zweiten Signal, welches von dem Bilddetektor (28) erfasst wurde, während das Mittel zur räumlichen Filterung (FS) die Lichtstrahlen eliminiert, welche aus einer Richtung oder einem begrenzten Bereich von Richtungen des Raumes hervorgehen, und
- die Berechnung zu wiederholen für eine Vielzahl von Richtungen oder begrenzte Bereiche von Richtungen des Raumes, sodass ein Spektrum eines Bildes der beobachteten Szene (1) rekonstruiert wird.

**6.** Vorrichtung nach einem der vorhergehenden Ansprüche, umfassend außerdem ein Mittel zur Datenverarbeitung (30), um ein breitbandiges Bild der Szene ausgehend von Signalen zu rekonstruieren, welche von dem Bilddetektor (28) erfasst wurden.

**7.** Vorrichtung nach Anspruch 6, wobei das Mittel zur Datenverarbeitung (30), um das Bild zu rekonstruieren, Mittel zur Berechnung der Dekonvolution der Signale, welche von dem Bilddetektor (28) erfasst wurden, im Verhältnis zu einer Apparatefunktion der Vorrichtung umfasst.

**8.** Vorrichtung nach einem der vorhergehenden Ansprüche, wobei das Mittel zur räumlichen Filterung (FS) ein erstes konvergentes optisches System (22), ein zweites konvergentes optisches System (25) und wenigstens eine Maske (24), welche in einer Bildebene (23) des ersten konvergenten optischen Systems (22) angeordnet ist, umfasst.

**9.** Vorrichtung nach Anspruch 8, wobei die opake Maske (24) eine lineare Form aufweist.

**10.** Vorrichtung nach einem der Ansprüche 8 oder 9, wobei das Mittel zur räumlichen Filterung (FS) außerdem wenigstens einen und vorzugsweise zwei Schirme (29', 29") umfasst, welche sich in der Bildebene (23) befinden, um einen Bereich von Richtungen von Lichtstrahlen, welche von der beobachteten Szene (1) hervorgehen, zu begrenzen und die Strahlen zu eliminieren, welche aus Richtungen ausgehen, die nicht zu dem Bereich gehören.

**11.** Vorrichtung nach einem der vorhergehenden Ansprüche, wobei die Mittel (21), um die Richtung oder den begrenzten Bereich von Richtungen des Raums variieren zu lassen in Entsprechung zu welcher bzw. welchem das Mittel zur räumlichen Filterung die Lichtstrahlen eliminiert, einen Dreh- oder Schwingspiegel (21) aufweist, um den Lichtstrahlen vor ihrem Eintritt in das Mittel zur räumlichen Filterung (FS) eine variable Abweichung zu verleihen.

**12.** Vorrichtung nach einem der Ansprüche 8-11, wobei die Mittel, um die Richtung oder den begrenzten Bereich von Richtungen des Raums variieren zu lassen, in Entsprechung zu welcher bzw. welchem das Mittel zur räumlichen Filterung (FS) die Lichtstrahlen eliminiert, Mittel zur linearen Verlagerung des Bilddetektors (28) im Verhältnis zu der beobachteten Szene aufweist.

**13.** Vorrichtung nach einem der vorhergehenden Ansprüche, wobei der Bilddetektor (28) eine Matrix von Sensoren für Lichtstrahlung umfasst.

**14.** Vorrichtung nach einem der vorhergehenden Ansprüche, welche dazu ausgestaltet ist, im infraroten Spektralbereich betrieben zu werden.

**Claims**

**1.** An optical device comprising:

- a spatial filtering means (FS) for eliminating, from among the light rays arising from an observed scene (1), those which originate from a direction or a restricted range of directions in space, not exceeding a tenth and preferably a hundredth of the width of the visual field of the device, while allowing through the largest part of the light rays arising from said scene;
- means (21) for varying the direction or the restricted range of directions in space in correspondence with which the spatial filtering means (FS) eliminates said light rays;

- a spectral dispersion means (26) for imparting to the light rays arising from said spatial filtering means (FS) a deviation dependent on their wavelength; and
- an image detector (28) for recording the light rays dispersed by said spectral dispersion means (26), each point of said image detector (28) receiving light rays arising from said scene (1) and exhibiting a different wavelength as a function of the direction in space from which they originate.

2. The device as claimed in claim 1, in which said spectral dispersion means (26) exhibits a dispersion plane and in which said direction or restricted range of directions in space in correspondence with which the spatial filtering means (FS) eliminates said light rays is a direction in said plane.

3. The device as claimed in one of the preceding claims, comprising a single spectral dispersion means (26).

4. The device as claimed in one of the preceding claims also comprising a data processing means (30) for reconstituting the spectrum of an image of the scene (1) observed on the basis of the signals recorded by said image detector (28) for various choices of the direction or the restricted range of directions in space in correspondence with which the spatial filtering means eliminates said light rays.

5. The device as claimed in claim4, in which said data processing means is adapted for:

- calculating a difference between a first signal, recorded by said image detector (28) in the absence of spatial filtering, and a second signal, recorded by said image detector (28) while said spatial filtering means (FS) eliminates the light rays which originate from a direction or a restricted range of directions in space; and
- repeating said calculation for a plurality of directions or of restricted ranges of directions in space so as to reconstitute a spectrum of an image of the observed scene (1).

6. The device as claimed in one of the preceding claims also comprising a data processing means (30) for reconstituting a wideband image of said scene on the basis of the signals recorded by said image detector (28).

7. The device as claimed in claim 6 in which said data processing means (30) for reconstituting said image comprises means for calculating the deconvolution of said signals recorded by the image detector (28) with respect to an apparatus function of said device.

8. The device as claimed in one of the preceding claims in which said spatial filtering means (FS) comprises a first convergent optical system (22), a second convergent optical system (25) and at least one mask (24) disposed in an image plane (23) of said first convergent optical system (22).

9. The device as claimed in claim 1 in which said opaque mask (24) has a linear shape.

10. The device as claimed in one of claims 8 to 9 in which said spatial filtering means (FS) also comprises at least one, and preferably at least two, baffles (29', 29") situated in said image plane (23) so as to delimit a range of directions of the light rays arising from said observed scene (1) and eliminate the rays arising from directions not belonging to said range.

11. The device as claimed in one of the preceding claims in which said means (21) for varying the direction or the restricted range of directions in space in correspondence with which the spatial filtering means eliminates the light rays comprise an oscillating or rotating mirror (21) for imparting a variable deviation to said light rays before they enter said spatial filtering means (FS).

12. The device as claimed in one of claims 8 to 11 in which said means for varying the direction or the restricted range of directions in space, in correspondence with which the spatial filtering means (FS) eliminates the light rays, comprise means of linear displacement of said image detector (28) with respect to said observed scene.

13. The device as claimed in one of the preceding claims in which said image detector (28) comprises a matrix of luminous radiation sensors.

14. The device as claimed in one of the preceding claims, adapted for operating in the spectral region of the infrared.

FIG.1

FIG.2

## RÉFÉRENCES CITÉES DANS LA DESCRIPTION

**Documents brevets cités dans la description**

- FR 2788137
- US 5627639 A
- US 3720469 A
- US 6101034 A
- US 2004080829 A
- US 5867264 A
- EP 642005 A

**Littérature non-brevet citée dans la description**

- **YVES GUERN ; LAURENCE GRENIER ; FRANÇOIS CARPENTIER.** Uncooled IRFPA for low-cost multispectral / hyperspectral LWIR imaging device. *Spie,* Avril 2003, vol. 5093, 126
- **J. W. GOODMAN.** Introduction to Fourier Optics. Mc-Graw-Hill Book Company